**Europäisches Patentamt**

**European Patent Office**

**Office européen des brevets**

(11) Veröffentlichungsnummer: **0 062 083**
**B1**

# EUROPÄISCHE PATENTSCHRIFT

(45) Veröffentlichungstag der Patentschrift:
**27.11.85**

(21) Anmeldenummer: **81102553.5**

(22) Anmeldetag: **04.04.81**

(51) Int. Cl.⁴: **G 01 J 4/00**

(54) **Einrichtung zur Bestimmung des Polarisationszustandes eines Lichtwellenfeldes und Verwendungen der Einrichtung zu interferometrischen und holographischen Messungen.**

(43) Veröffentlichungstag der Anmeldung:
**13.10.82 Patentblatt 82/41**

(45) Bekanntmachung des Hinweises auf die Patenterteilung:
**27.11.85 Patentblatt 85/48**

(84) Benannte Vertragsstaaten:
**DE FR GB**

(56) Entgegenhaltungen:
US - A - 30 836
US - A - 3 694 088
US - A - 3 864 513
US - A - 3 992 571

OPTICAL ENGINEERING, Band 20, Nr. 1,
Januar/Februar 1981, Seiten 014-018 Bellingham, WA,
U.S.A. R. WALRAVEN: "Polarization Imagery"
APPLIED OPTICS, Band 9, Nr. 12, Dezember 1970,
Seiten 2648-2649 New York, U.S.A. D.H. MENZEL et al.:
"A system for recording the polarization of extended
astronomical objects"
INSTRUMENTS AND EXPERIMENTAL TECHNIQUES,
Band 21, Nr. 6, Teil 2, November/Dezember 1978, Seiten
1607-1609 New York, U.S.A. G.I. UTKIN: "High-speed
scanning polarimeter"

(73) Patentinhaber: **IBM DEUTSCHLAND GMBH,
Pascalstrasse 100, D-7000 Stuttgart 80 (DE)**

(84) Benannte Vertragsstaaten: **DE**

(73) Patentinhaber: **International Business Machines
Corporation, Old Orchard Road, Armonk, N.Y. 10504 (US)**

(84) Benannte Vertragsstaaten: **FR GB**

(72) Erfinder: **Korth, Hans-Erdmann, Sandberger Strasse 34,
D-7000 Stuttgart 1 (DE)**

(74) Vertreter: **Teufel, Fritz, Dipl.-Phys., IBM Deutschland
GmbH. Europäische Patentdienste Postfach 265,
D-8000 München 22 (DE)**

## Beschreibung

Die Erfindung betrifft eine Einrichtung zur Bestimmung des Polarisationszustandes eines Lichtwellenfeldes, nach dem Oberbegriff des Anspruchs 1 und Verwendungen der Einrichtung zu interferometrischen und holographischen Messungen.

Die Bestimmung des lokalen Polarisationszustandes eines im allgemeinen Fall elliptisch polarisierten Lichtwellenfeldes erfordert für jeden Punkt eine zeitraubende Messung der von einem Analysator bei verschiedenen Azimutwinkeln durchgelassenen Intensität; die Auswertung dieser Messung zur Bestimmung der sogenannten Polarisationsellipse, die den Polarisationszustand an dem betrachteten Punkt des Wellenfeldes bestimmt, ist ausserdem kompliziert und in vielen Fällen nur mit einem Rechner durchführbar. Grössere Lichtwellenfelder mit polarisierter Strahlung können daher nur mit unverhältnismässig grossem Aufwand punktweise untersucht werden; die Kenntnis dieses Polarisationszustandes wäre andererseits für viele Messungen sehr wünschenswert.

Ein derartiger Fall betrifft das Problem, die lokalen Eigenschaften dünner transparenter Schichten über einem Substrat zu bestimmen; als Beispiele seien Isolations- und Passivierungsschichten bei der Herstellung integrierter Schaltkreise genannt. Zur Erzielung der gewünschten Schaltungsparameter muss z.B. die Dicke dieser Schichten während oder nach ihrer Herstellung sehr genau bestimmt werden; dies kann im Prinzip bei bekanntem Brechungsindex der Schicht mit interferometrischen Messmethoden erfolgen. Die Brechungsindizes von dünnen Schichten hängen jedoch stark von deren Herstellverfahren ab, so dass sie ohne Messung nicht mit der notwendigen Genauigkeit angegeben werden können. Zur gleichzeitigen Bestimmung von Schichtdicke und Brechungsindex einer dünnen transparenten Schicht stellt das ellipsometrische Verfahren die genaueste Methode dar. Bei diesem Verfahren wird ein polarisiertes Lichtbündel kleinen Durchmessers unter schiefem Einfall auf die zu untersuchende Schicht gerichtet und die Intensität des reflektierten Bündels in Abhängigkeit vom Azimutwinkel eines Analysators bestimmt. Aus der gemessenen Intensitätsverteilung lässt sich dann der Polarisationszustand des reflektierten Bündels in Form einer sogenannten Polarisationsellipse bestimmen, aus der wiederum Schichtdicke und Brechungsindex der Schicht ermittelt werden können.

Der Zeitaufwand für eine derartige Punktmessung ist relativ beträchtlich, so dass eine Ausmessung grösserer Flächen nur in Ausnahmefällen erfolgen kann; dies gilt auch, wenn der Messvorgang in sogenannten automatischen Ellipsometern durchgeführt wird, in denen sich der Analysator mit hoher Geschwindigkeit dreht wie z.B. in der US-PS 4,030,836. Die punktweise ellipsometrische Ausmessung grosser Flächen ist daher aus Zeitgründen nur in Ausnahmefällen möglich.

Ausserdem ist die Ortsauflösung der Messung infolge der schiefen Inzidenz gering.

Weitere Beispiele für die polarisationsoptische Untersuchung von Lichtwellenfeldern sind in den Artikeln von R. Walraven, «Polarization Imagery», Optical Engineering, Vol. 20, No. 1 Jan./Feb. 1981, Seiten 14–18, von D.H. Menzel, et al., «A System for Recording the Polarization of Extended Astronomical Objects», Applied Optics, Vol. 9, Dez. 1970, Seiten 2648–2649 und in der US Patentschrift 3,864,513 zu finden. Der Polarisationszustand des Lichtwellenfeldes wird dort rechnerisch aus den Intensitätswerten ermittelt, die bei verschiedenen Winkelstellungen von Polarisatoren aufgenommen wurden; dafür ist ein grosser zeitlicher und apparativer Aufwand erforderlich. Aus der US Patentschrift 3,992,571 ist eine Fernsehkamera mit zwei Aufnahmeröhren bekannt, denen gekreuzte Polarisationsfilter vorgeschaltet sind, um einen Teilaspekt der Polarisationseigenschaften zu ermitteln, nämlich den Polarisationsgrad.

Lichtwellenfelder mit lokal unterschiedlichem Polarisationszustand könnten ausserdem für eine Reihe weiterer Anwendungen herangezogen werden, sofern eine schnelle und lokale Auswertung des Polarisationszustandes ermöglicht wird; Beispiele hierfür sind Spannungsoptik, Kristalloptik oder Saccharimetrie.

Die vorliegende Erfindung stellt sich daher die Aufgabe, eine Einrichtung der eingangs genannten Art anzugeben, mit der ohne grossen zeitlichen und apparativen Aufwand alle Punkte eines grösseren Wellenfeldes parallel auf ihren Polarisationszustand ausgemessen werden können.

Diese Aufgabe wird durch die im Anspruch 1 gekennzeichnete Erfindung gelöst; Ausgestaltungen der Erfindung sind in den Unteransprüchen gekennzeichnet. Verwendungen der Einrichtung sind in den Ansprüchen 7 bis 9 gekennzeichnet.

Die Erfindung schlägt zur Auswertung eines Polarisationsfelds eine sogenannte Polarisationskamera vor, die nach dem Prinzip einer Farbfernsehkamera arbeitet; die dichroitischen Farbauszugsfilter werden jedoch durch Polarisationsfilter ersetzt, deren Durchlassrichtungen sich um jeweils 60 Grad unterscheiden. Das von dieser Polarisationskamera erzeugte Ausgangssignal enthält alle Informationen über den Polarisationszustand der auftreffenden Strahlung; wird dieses Ausgangssignal auf einen Farbmonitor gegeben, so kann aus der Verteilung von Helligkeit, Farbe und Farbsättigung auf den Polarisationszustand der einfallenden Strahlung geschlossen werden.

Die Möglichkeit der schnellen visuellen Darstellung eines grossflächigen Polarisationsfeldes eröffnet der Polarisationskamera eine grosse Zahl von Anwendungsmöglichkeiten. In einer ellipsometrischen Messeinrichtung kann die Polarisationskamera zur laufenden Überwachung einer Produktionslinie eingesetzt werden, da die visuelle Beobachtung auch ungeübten Bedienern ein sofort verständliches Bild ergibt. Durch visuellen Vergleich des Polarisationsbildes mit einem normalen Bild der untersuchten Oberfläche können auch auf einfache Weise Zusammenhänge zwischen der sichtbaren Struktur einer dünnen Schicht und deren aus dem Polarisationsbild bestimmten Eigenschaften erkannt werden. Das Polarisationsbild lässt sich ausserdem leicht auf elektronischem oder digitalem Weg weiterverarbeiten, um so die Auswertung weiter zu erleichtern.

Die hiermit zur Verfügung gestellte einfache Möglichkeit zur Auswertung des Polarisationszustandes erlaubt es, den Genauigkeitsbereich bekannter optischer Verfahren in beträchtlichem Mass zu steigern; besonders vorteilhafte Anwendungen der hier beschriebenen Polarisationskamera liegen beispielsweise auf dem Gebiet der interferometrischen Oberflächentopographie und der interferometrischen Holographie.

Zur Herstellung der Polarisationskamera kann ohne weiteres auf die üblichen Typen bekannter Farbfernsehkameras zurückgegriffen werden.

Ausführungsbeispiele der Erfindung werden nun anhand von Zeichnungen näher erläutert.

Es zeigen:

Fig. 1 den schematischen Aufbau einer ellipsometrischen Messeinrichtung mit einer Dreiröhren-Polarisationskamera

Fig. 2 ein Ausführungsbeispiel einer Einröhren-Polarisationskamera

Fig. 3A ein Diagramm mit Polarisationsellipse zur Darstellung der Signalaufbereitung in der Polarisationskamera

Fig. 3B das aus der Farbmetrik bekannte Farbdreieck

Fig. 4 ein interferometrisches System zur Untersuchung von Oberflächen mit einer Polarisationskamera

Fig. 5a eine Einrichtung zur holographischen Interferometrie mit einer Polarisationskamera

Aufbau und Funktionsweise der Polarisationskamera werden zunächst anhand einer ellipsometrischen Einrichtung beschrieben.

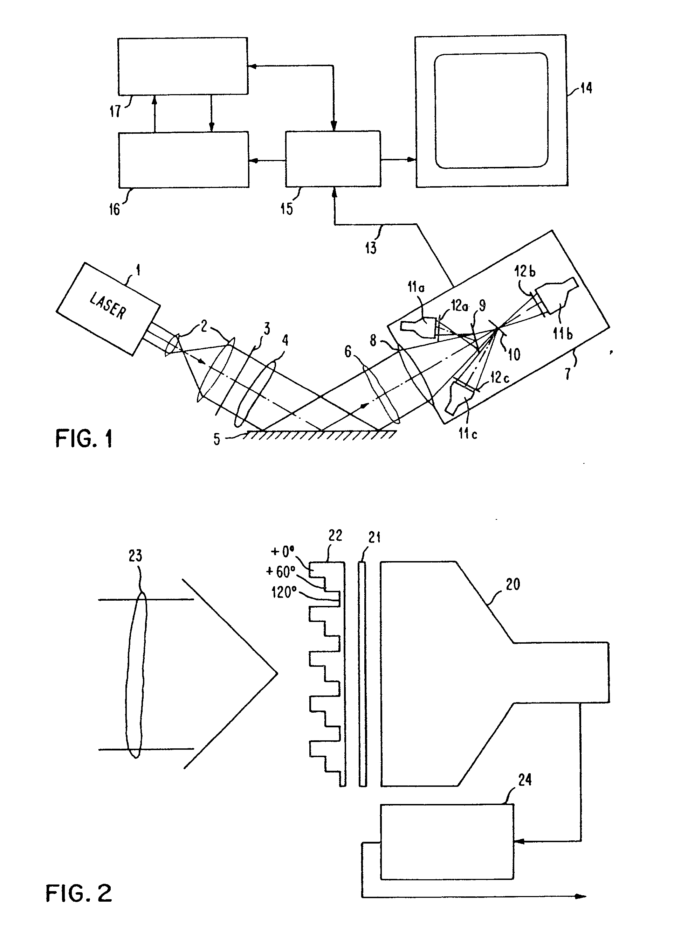

In Fig. 1 besteht eine ellipsometrische Messeinrichtung aus einem Laser, einer nachgeschalteten, aus zwei Sammellinsen bestehenden Strahlaufweitungsoptik 2, aus der ein Lichtbündel 4 mit grossem Durchmesser austritt. Das Bündel durchläuft Polarisator 3, der unter einem Azimutwinkel von 45 Grad orientiert ist und gelangt unter schiefem Einfallswinkel zur Messoberfläche 5, auf der eine dünne Schicht angebracht ist. Bei der Reflektion an der Oberfläche 5 wird die lineare Polarisation des Bündels 4 gestört, so dass im Ausgangsbündel 6 eine im allgemeinen elliptische Polarisation vorliegt. Das Ausgangsbündel 6 gelangt in eine Polarisationskamera 7 mit einer Abbildungsoptik 8, zwei Strahlteilern 9 und 10 und insgesamt drei Bildwandlerröhren 11a, 11b, 11c, denen jeweils Polarisatoren 12a, 12b, 12c vorgeschaltet sind, deren Durchlassrichtung sich um jeweils 60 Grad unterscheiden. Orientierung und Durchlassgrad der Strahlteiler 9 und 10 sind so gewählt, dass jede der Röhren 11 gleiche Intensität empfängt. Das Ausgangssignal der Polarisationskamera 7 gelangt über Leitung 13 zu einem Farbfernsehmonitor 14. An Leitung 13 können wahlweise weitere Geräte angeschlossen werden, z.B. ein Konturgenerator 15 zur Erzeugung von Linien gleicher Intensität oder Phase sowie ein Rechner 16 oder eine Speichereinheit 17 zur digitalen Verarbeitung bzw. Speicherung des von der Polarisationskamera 7 erzeugten Polarisationsbildes.

Die Polarisationskamera 7 ist eine handelsübliche Farbfernsehkamera, bei der anstelle der Farbauszugfilter (grün, rot, blau) Polarisatoren (z.B. Polarisationsfolien) eingebaut sind.

Fig. 2 zeigt eine weitere Ausführungsform einer Polarisationskamera mit einer einzigen Bildwandlerröhre; sie entspricht ebenfalls einem bekannten Typ einer Farbfernsehröhre, in der die Farbauszugfilter streifenförmig vor der Bildwandlerröhre angeordnet sind. Im Fall der Polarisationskamera befindet sich vor der Lichteintrittsfläche der Bildwandlerröhre 20 ein Polarisationsfilter 21 und eine streifenförmige Anordnung 22 von Gebieten, in denen die Polarisationsrichtung des eintreffenden Lichtbündels 23 jeweils um 0, 60 oder 120 Grad gedreht wird. Dieser Effekt kann beispielsweise durch verschiedene Dicke einer polarisationsdrehenden Substanz in der Schicht 22 erreicht werden. Bei sequenziellem Abtasten der Bildfläche in Röhre 20 durch den Elektronenstrahl entstehen somit hintereinander jeweils drei Signale, die den Gebieten mit verschiedener Polarisationsdrehung entsprechen; in einem Decodierer 24 können diese Signale elektronisch getrennt werden und entsprechen dann den Ausgangssignalen der drei Bildwandlerröhren nach Fig. 1.

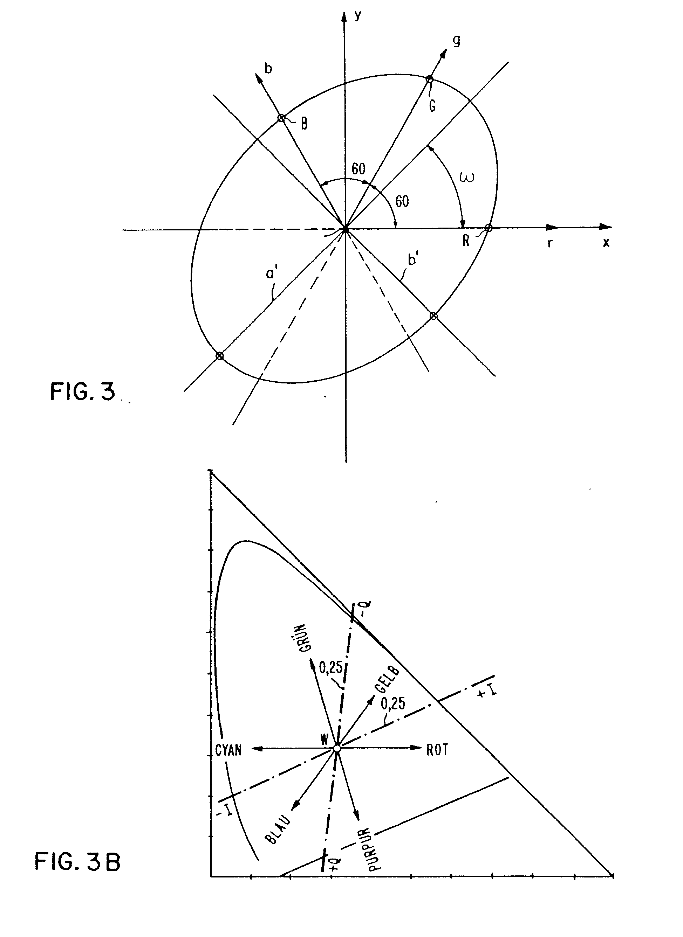

Die Wirkungsweise der Polarisationskamera wird nun anhand der in Fig. 3A dargestellten Polarisationsellipse erläutert. Für einen Beobachter, der in Richtung des an der Oberfläche 5 reflektierten Lichts blickt, durchläuft die Spitze des elektrischen Vektors der Lichtwelle an jedem Punkt des betrachteten Lichtwellenfeldes eine Ellipse, die sogenannte Polarisationsellipse. Diese Ellipse ergibt sich bei der Zusammensetzung zweier senkrecht zueinander polarisierter linearer Schwingungen, die einen gegenseitigen Phasenunterschied aufweisen. Das Achsenverhältnis $a'/b'$ der Ellipse und die Lage der Hauptachse im Raum (Winkel $\omega$) ist durch das Amplitudenverhältnis und Phasendifferenz der beiden linearen Schwingungen bestimmt. In Fig. 3 ist die Ellipse in ein rechtwinkliges xy-Koordinatensystem eingezeichnet, wobei angenommen ist, dass die x-Richtung mit der Einfallsebene des an der Oberfläche 5 reflektierten Strahls zusammenfällt.

Für jeden Punkt des an der Oberfläche 5 reflektierten Strahlenbündels muss nun die individuelle lokale Polarisationsellipse bestimmt werden. Dazu dienen die in Fig. 3 ebenfalls eingezeichneten und mit r, g, b bezeichneten Durchlassrichtungen der drei Polarisatoren in der Polarisationskamera. Die Durchlassrichtung r wurde dabei willkürlich als mit der Einfallsebene zusammenfallend angenommen. Zwischen den Richtungen r und g sowie g und b werden jeweils Winkel von 60° eingeschlossen.

Die Schnittpunkte R, G, B der Richtungen r, g, b mit der Polarisationsellipse bestimmen jeweils die Grösse des elektrischen Vektors, der bei einer bestimmten Lage der Polarisationsellipse von jedem der drei Polarisatoren durchgelassen wird. Die hinter den Analysatoren von den Bildwandlerröhren aufgezeichneten Intensitäten entsprechen dabei dem Quadrat dieses Wertes. Mit den so gemessenen Werten R, G, B ist nun die Lage (Winkel $\omega$) und die Gestalt (Achsenverhältnis $a'/b'$) der Polarisationsellipse an dem betrachteten Punkt des Strahlungsbündels 9 eindeutig bestimmt. Da die Werte R, B, G von der Polarisationskamera beim Abtasten des Strahlenbündels 9 für jeden Punkt des Wellenfeldes erzeugt werden, ist der Polarisationszustand des gesamten, auf die Kamera fallenden Wellenfelds nach dem einmaligen Abtasten dieses Wellenfelds bestimmt und kann auf einem angeschlossenen Monitor sichtbar gemacht werden. Die Art der Zuordnung zwischen Lage und Gestalt der Polarisationsellipse und den für die visuelle Darstellung relevanten Parametern des Farbfernsehmonitors (Helligkeit, Farbton, Farbsättigung) kann dabei beliebig erfolgen.

Eine besonders vorteilhafte Zuordnung der gemessenen Polarisationsparameter zu den Parametern eines Farbmonitors lässt sich finden, wenn gewisse Analogien zwischen der polarisationsoptischen Messung und der Verarbeitung von Farbsignalen in üblichen Farbfernsehsystemen beachtet werden. Beim Farbfernsehen werden bekanntlich zur Übertragung des Informationsgehaltes eines Farbbildes zwei Signale verwendet:

1. Das sogenannte Luminanzsignal, das der Helligkeit eines Punktes im Farbbild entspricht und nach folgender Vorschrift aus den drei Ausgangssignalen der Bildröhren für die Farbauszüge R (für rot), B (für blau) und G (für grün) zusammengesetzt wird:

$$Y = 0,3\,R + 0,59\,G + 0,11\,B$$

2. Das Chrominanzsignal, dessen Phasenlage den Farbton und dessen Amplitude den Farbsättigungsgrad bestimmen. Dieses Chrominanzsignal entsteht durch Amplitudenmodulation eines Farbhilfsträgers mit zwei Signalen, die aus Linearkombinationen von R, B und G gebildet sind und zur sogenannten Quadratur-Amplitudenmodulation um 90° gegeneinander phasenverschoben werden. In PAL-Farbfernsehsystem sind diese Signale

$$U = 0,493\,(B-Y)$$
$$V = 0,877\,(R-Y),$$

im NTSC-System

$$I = 0,6\,R - 0,28\,G - 0,32\,B$$

$$Q = 0,21\,R - 0,52\,G + 0,31\,B.$$

In Fig. 3B ist die aus der Farbmetrik bekannte Farbtafel (Farbdreieck) wiedergegeben, durch deren Weisspunkt W die Achsen I und Q eines schiefwinkligen Koordinatensystems gezogen werden können, die den oben erwähnten Signalen I und Q entsprechen. Die U-, V-Achsen sind gegen die I-, Q-Achsen geringfügig gedreht. Einzelheiten der hier angesprochenen Farbfernsehtechniken sind beispielsweise in folgenden Veröffentlichungen beschrieben:

W.A. Holm, Farbfernsehtechnik ohne Mathematik, Eindhoven, 1966
O. Limann, Fernsehtechnik ohne Ballast, München, 1979
W. Dillenburger, Einführung in die Fernsehtechnik, Berlin, Band 1, 4. Aufl. 1975; Band 2, 1969
B. Morgenstern, Farbfernsehtechnik, 1977

Werden nun die Ausgangssignale der Polarisationskamera bei verschiedenen Stellungen des Polarisators ebenfalls als Farbauszüge R, G, B aufgefasst und mit diesen Signalen die selben Verknüpfungen wie beim Farbfernsehen durchgeführt, so ergeben sich ohne weiteres folgende Beziehungen:

– die Phasenlage des polarisationsoptischen «Chrominanzsignals», bzw. der Farbton, entspricht der Lage der Hauptachse der Polarisationsellipse;
– dem Verhältnis der Amplitude des polarisationsoptischen «Chrominanzsignals» (bzw. Farbsättigung) zur polarisationsoptischen «Luminanz» (bzw. Helligkeit) entspricht die Exzentrizität (das Achsenverhältnis $a'/b'$) der Polarisationsellipse.

Zur Erläuterung dieses Zusammenhangs seien einige Grenzfälle betrachtet:

a) bei zirkular polarisiertem Licht empfangen alle drei Bildwandlerröhren der Polarisationskamera dasselbe Signal (R = B = G = 1); dieser Fall entspricht im Farbdreieck dem Weisspunkt, da maximale Luminanz (Y = 1) und fehlende Chrominanz (I = Q = O) zusammentreffen.
b) bei polarisiertem Licht, dessen Polarisationsrichtung mit einer der drei Durchlassrichtungen (z.B. r) zusammenfällt, empfängt die zugeordnete Bildwandlerröhre ein maximales Signal (z.B. R = 1), die beiden anderen Röhren entsprechend der Beziehung $I \sim \cos^2\varnothing$ die Intensität I = 0,25. Die Luminanz sinkt dadurch auf den Wert 0,48, die Chrominanz nimmt zu (I = 0,45, Q = 0,16). Diese Lage der Polarisationsellipse ergibt auf dem Fernsehmonitor einen Bildpunkt im roten Spektralbereich mit tiefer Farbsättigung. Eine Drehung der Polarisationsebene dieses linear polarisierten Lichts entspricht einer Drehung des zugeordneten Vektors im Farbdreieck. Mit zunehmender Elliptizität des Lichtes nimmt die Farbsättigung ab und die Luminanz zu.

Mit der oben erläuterten Zuordnung polarisationsoptischer Eigenschaften zu Eigenschaften des Chrominanzsignals ergibt sich eine ausserordentlich vorteilhafte Möglichkeit zur quantitativen Analyse des Polarisationszustandes durch elektronische Auswertung des Chrominanzsignals für jeden Punkt des Gesichtsfeldes. Da die Bestimmung der relativen Phase in einem elektronischen Signal und die Messung der jeweiligen Amplitude mit sehr grosser Genauigkeit erfolgen können, ergibt sich eine hohe Messauflösung für die polarisationsoptischen Parameter.

Zur Erleichterung der visuellen Auswertung kann die Anzeige auf dem Farbmonitor mit elektronischen Mitteln (Generator 15) so aufbereitet werden, dass nur Punkte gleicher Helligkeit und/oder gleichen Farbtons und/oder gleicher Farbsättigung angezeigt werden. Dadurch entstehen Linienzüge, die an Höhensichtlinien erinnern. Die Auswahl der so ausgezeichneten Punkte kann sehr einfach mit elektronischen Vergleichsschaltungen für die Amplituden und/oder die Phasen der Luminanz- und Chrominanzsignale erfolgen.

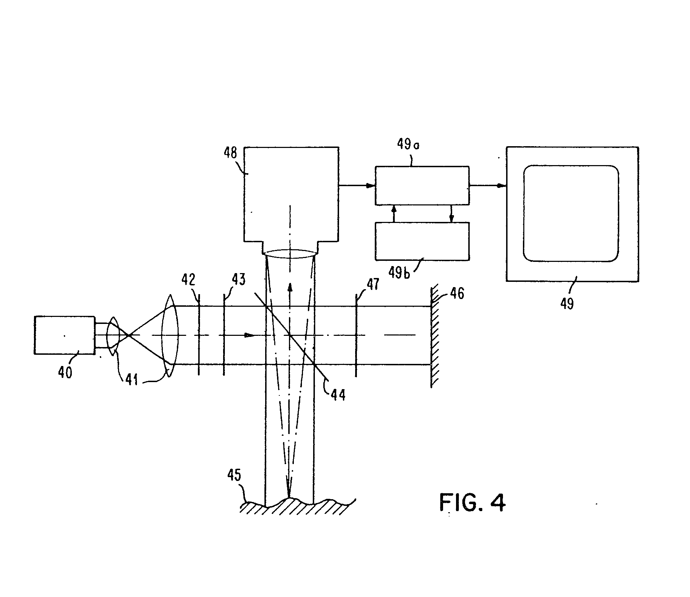

In Fig. 4 ist die Anwendung der Polarisationskamera in einem interferometrischen Gerät zur Untersuchung von Oberflächentopographien dargestellt. Eine Lichtquelle 40, vorzugsweise ein Laser, beleuchtet über eine Strahlaufweitungsoptik 41, einen Polarisator 42, eine λ/4-Platte 43 und einen halbdurchlässigen Spiegel 44 die Oberfläche 45 eines zu untersuchenden Objekts sowie einen ebenen Bezugsspiegel 46. Zwischen dem Strahlenteiler 44 und 46 ist eine zweite λ/4-Platte 47 angebracht. Die an den Oberflächen 45 und 46 reflektierten Strahlen gelangen zu einer Polarisationskamera 48, deren Ausgangssignale auf einen Farbmonitor 49 gegeben werden. Zwischen Polarisationskamera und Farbmonitor können wahlweise elektronische Geräte 49a zur Erzeugung von Konturlinien, und Speicher 49b zur Speicherung eines Referenzmusters geschaltet sein.

Die Wirkungsweise dieses Oberflächentopographiegeräts beruht auf der Superposition zweier zirkular polarisierter Wellenfelder mit unterschiedlicher Umlaufrichtung des Polarisationsvektors. Bei dieser Superposition entsteht linear polarisiertes Licht, dessen Polarisationsrichtung von der relativen Phasenlage der beiden Wellenfelder abhängt. In der Anordnung nach Fig. 4 erzeugt λ/4-Platte 43 das zirkular polarisierte Licht, das auf die Messfläche 45 gerichtet und von dieser reflektiert wird. Das von der Lichtquelle durch den Strahlenteiler 44 durchgehende, ebenfalls zirkular polarisierte Licht wird beim zweimaligen Durchgang durch die zweite λ/4-Platte 47 wieder in zirkular polarisiertes Licht umgewandelt, das aber bezüglich des an der Oberfläche 45 reflektierten Lichts die umgekehrte Umlaufrichtung aufweist. Nach der Vereinigung der beiden reflektierten Strahlenteile durch den Strahlenteiler 45 ergibt sich als Eingangsstrahlung für die Polarisationskamera 48 ein linear polarisiertes Lichtwellenfeld, wobei die lokale Polarisationsrichtung durch die Phasenverschiebungen bestimmt sind, die infolge von Unebenheiten der Fläche 45 an den verschiedenen Punkten des reflektierten Wellenfeldes auftreten.

Durch den Einsatz der Polarisationskamera ergibt sich die Möglichkeit, die bei der Anordnung nach Fig. 4 entstehenden «natürlichen» Interferenzstreifen (entsprechend einem Unterschied der Polarisationsrichtungen von 90°) durch «künstliche Interferenzfarben» zu ergänzen, die zwischen den natürlichen Interferenzstreifen liegen und eine quantitative Interpolation ermöglichen. Die Auflösung dieser Interpolation ist dabei sehr hoch; bei einer Wellenlänge des verwendeten Lichtes von

$\lambda = 633$ nm entspricht eine Drehung der Polarisation um 180° beispielsweise einem Höhenunterschied von 158 nm. Kann die Phase des Chrominanzsignals mit elektronischen Mitteln auf 1% genau bestimmt werden, so ergibt sich eine Messgenauigkeit der Anordnung von besser als 2 nm.

Die Speichereinrichtung 49b kann beispielsweise dazu verwendet werden, das Oberflächenprofil einer Referenzfläche abzuspeichern, um bei der Untersuchung einer Oberfläche mit elektronischen Mitteln den Unterschied zwischen Mess- und Referenzfläche bilden zu können; die Ergebnisse des Vergleichs können dann als Korrekturmuster dem Messbild auf dem Monitor überlagert werden.

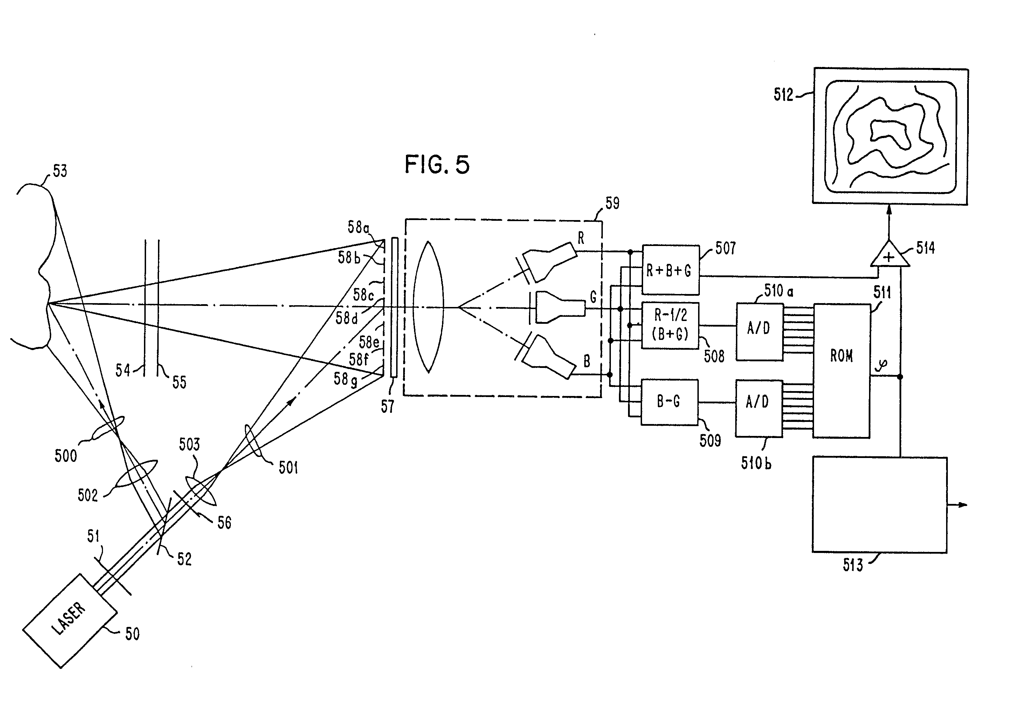

In Fig. 5 ist eine Anwendung der Polarisationskamera zur phasengerechten Auswertung bei der holographischen Interferometrie skizziert. Die holographische Interferometrie beruht darauf, von einem auf Deformationen zu untersuchenden Gegenstand zwei Hologramme auf einem Aufzeichungsträger aufzunehmen, wobei das erste dem nicht deformierten und das zweite dem deformierten Körper entspricht. Bei der Rekonstruktion des Doppelhologramms entstehen Interferenzen, die Auskunft über die lokalen Deformationen geben. Statt einer Doppelbelichtung kann auch die Interferenz zwischen dem beleuchteten Gegenstand selbst und seiner holographischen Rekonstruktion verwendet werden. In der bisher bekannten holographischen Interferometrie kann das Vorzeichen der Deformation jedoch nur auf indirekte Art und Weise bestimmt werden.

Zur eindeutigen Bestimmung des Vorzeichens einer Deformation wird in Fig. 5 vorgeschlagen, einzelnen Bereichen der entstehenden Hologrammaufzeichnung bestimmte Phasenunterschiede (0°, 60°, 120°) aufzuprägen, um bei der Rekonstruktion des Hologramms aus den verschiedenen, bekannten Phasenunterschieden die Phase an jedem Punkt der Rekonstruktion bestimmen zu können.

Bei der Aufzeichnung der Hologramme wird dazu die Phase der Lichtwelle als Polarisationsrichtung codiert; die quantitative Bestimmung der Phase im Interferenzbild der Rekonstruktion

erfolgt dann mit Hilfe einer Polarisationskamera.

In Fig. 5 soll im ersten Schritt der holographischen Interferometrie das Hologramm eines Objekts 53 auf einem holographischen Aufzeichnungsträger 57 erzeugt werden. Dazu wird Licht eines Lasers 50 über einen Polarisator 51 und einen Strahlenteiler 52 als Objektstrahlenbündel auf das Objekt 53 gerichtet, an dem es reflektiert wird und über eine λ/4-Platte 55 auf den Aufzeichungsträger 57 fällt. Falls das Objekt 53 depolarisierend wirkt – was im allgemeinen der Fall ist – so wird ein weiterer Polarisator 54 vor der λ/4-Platte 55 benötigt.

Das den Strahlenteiler 52 durchsetzende Lichtbündel durchläuft als Referenzbündel 501 eine λ/4-Platte 56 bevor es auf den Aufzeichnungsträger 57 auftrifft. Im Strahlengang von Objekt- und Referenzbündel sind an geeigneten Stellen abbildende Elemente 502, 503 angebracht.

Die λ/4-Plättchen 55, 56 sind so orientiert, dass sie zirkular polarisiertes Licht mit entgegengesetzten Umlaufrichtungen erzeugen. Die Überlagerung dieser beiden zirkularisierten Wellen auf der Aufzeichnungsfläche 57 ergibt linear polarisiertes Licht, dessen Polarisationsrichtung vom relativen Phasenunterschied der beiden zirkularen Wellen abhängt.

Der Aufzeichnungsfläche 57 sind streifenförmige Polarisatoren 58a, 58b, ... vorgeschaltet, deren Durchlassrichtungen sich jeweils um 60° voneinander unterscheiden. Im Hologramm 57 sind somit nach der Aufzeichnung verschiedene Interferenzfiguren gespeichert, deren Phase sich jeweils um 60° unterscheidet.

Nach der Entwicklung des Aufzeichnungsträgers 57 wird dieser in exakt dieselbe Position zurückgebracht, die er bei der Aufnahme des Hologramms innehatte. Zur Rekonstruktion des Hologramms an der Stelle des Objekts 53 wird der Aufzeichnungsträger 57 wieder mit der Referenzwelle 501 beleuchtet. Da ausserdem wie bei der Aufnahme des Hologramms das Objekt 53 mit der Objektwelle 500 beaufschlagt wird, ergeben sich Interferenzen zwischen dem rekonstruierten Bild des Objekts 53 und dem Objekt 53 selbst. Bei dieser Rekonstruktion wird die Umlaufrichtung der zirkular polarisierten Wellen 500 und 501 gleichsinnig gewählt (durch entsprechende Orientierung der λ/4-Platte in den beiden Strahlengängen); die einzelnen Bereiche der holographischen Aufzeichnung sind dann optisch gleichwertig.

In dem entstehenden Interferenzbild sind nun drei Komponenten enthalten, die den verschiedenen Durchlassrichtungen der Polarisatoren 58 entsprechen und damit verschiedene Phasen aufweisen. Wird dieses Interferenzfeld nun mit einer Polarisationskamera 59 (durch den Aufzeichnungsträger 57) betrachtet, so empfängt jede der drei Bildwandlerröhren einen bestimmten Anteil der drei phasenverschobenen Komponenten; durch Zusammensetzung dieser Komponenten lässt sich nun für jeden Punkt des Interferenzfeldes die zugehörige Phase und damit das Vorzeichen der Deformation bestimmen.

Diese Bestimmung der absoluten Phase entspricht dem bei einem sinusförmigen Signal (Y = M + A · sin (X + ψ) allgemein angewandten Verfahren, dessen unbekannte Amplitude A, Phase ψ und Mittelwert M durch drei Messpunkte zu bestimmen, die eine bekannte gegenseitige Phasenverschiebung (hier ± 120°) aufweisen.

Die Auswertung des von der Polarisationskamera 59 aufgenommenen Bildes durch lokale Analyse der jeweiligen Polarisationsrichtung erfolgt in gleicher Weise wie bei den früher beschriebenen Beispielen: wiederum sind Luminanz- und Chrominanzsignale die Träger der Information, die ausgewertet werden.

In Fig. 5 ist ausserdem eine vereinfachte Schaltung zur Erzeugung von Signalen dargestellt, die funktionell dem Luminanz- und Chrominanzsignal entsprechen. Im Block 507 wird die Summe der drei Ausgangssignale der Bildwandlerröhren in der Polarisationskamera 59 erzeugt (entsprechend der Luminanz), in den elektronischen Baugruppen 508 und 509 die Linearkombinationen der Ausgangssignale R – 1/2 (G + B) bzw. B – G. Diese Linearkombinationen entsprechen im wesentlichen den Signalen I und Q, deren Superposition mit einem Phasenunterschied von 90° das Chrominanzsignal ergibt. Das Amplitudenverhältnis der Ausgangssignale von Block 508 und 509 entspricht dem Tangens des Phasenwinkels ψ im Chrominanzsignal. Der Phasenwinkel selbst kann somit als Arcus-Tangens-Wert des Amplitudenverhältnisses ermittelt werden; dazu wird mit den in den Blöcken 510a, b digitalisierten Amplituden ein Festwertspeicher 511 adressiert, der den Wertevorrat für Arcus-Tangens-Funktion enthält. Der ermittelte Phasenwert ψ wird über eine Summierschaltung 514 als Farbtoninformation zusammen mit dem Luminanzsignal einem Farbmonitor 512 zugeführt. Wahlweise ist zur Digitalverarbeitung ein Rechner 513 an die Polarisationskamera 59 und den Farbmonitor 512 anschliessbar.

Die oben angegebene Linearkombination der Einzelsignale ergibt sich aus folgender Betrachtung: Das bei einer kontinuierlichen Phasenverschiebung der beiden interferierenden Strahlenbündel entstehende Signal ist periodisch und sinusförmig:

$$Y = M + A \cdot \sin (X + \psi)$$

Seine Amplitude A, sein Mittelwert M und seine Phase ψ sind unbekannt. Die Dreipunktabtastung dieses Signals mit Hilfe der drei verschieden orientierten Polarisatoren liefert die Signale

$$R = M + A \cdot \sin \psi$$
$$B = M + A \cdot \sin (\psi + 120°)$$
$$G = M + A \cdot \sin (\psi - 120°)$$

Unter Beachtung der trigonometrischen Beziehungen

$$- \sin x = \sin (x - 120°) + \sin (x + 120°)$$
$$\cos x = \frac{1}{\sqrt{3}} \{\sin (x - 120°) - \sin (x + 120°)\}$$

und

$$M = \frac{1}{3}(R + G + B)$$

$$A \cdot \sin \psi = R - M = \frac{1}{3}(2R - B - G)$$

$$A \cdot \sin (\psi + 120°) = B - M$$

$$A \cdot \sin (\psi - 120°) = G - M$$

folgt für die gesuchte Phase $\psi$:

$$\tan \psi = \frac{2R - (B + G)}{\sqrt{3}(G - B)}$$

Bis auf konstante Faktoren stellen Zähler und Nenner dieses Ausdrucks die Ausgangssignale der elektronischen Baugruppen 508 und 509 dar, die zur Adressierung der arc tan-Tabelle im Festwertspeicher 511 verwendet werden.

## Patentansprüche

1. Einrichtung zur Bestimmung des Polarisationszustandes eines Lichtwellenfeldes, mit einer Polarisationsfilter enthaltenden Fernsehkamera, dadurch gekennzeichnet, dass zur punktweisen Bestimmung von Lage und Gestalt der lokalen Polarisationsellipse des Lichtwellenfeldes (6) als Fernsehkamera eine Polarisationskamera (7) in Form einer modifizierten Farbfernsehkamera vorgesehen ist, deren drei Farbfilter jeweils durch Polarisatoren (12a, b, c) ersetzt sind, deren Durchlassrichtungen sich um jeweils 60° unterscheiden.

2. Einrichtung nach Anspruch 1, dadurch gekennzeichnet, dass die modifizierte Farbfernsehkamera eine Dreiröhrenkamera mit jeweils zugeordneten Polarisatoren (12) ist.

3. Einrichtung nach Anspruch 1, dadurch gekennzeichnet, dass die modifizierte Farbfernsehkamera Polarisationsfilter nach Art eines Farbstreifenfilters aufweist.

4. Einrichtung nach einem der Ansprüche 1 bis 3, dadurch gekennzeichnet, dass der Polarisationszustand des Lichtwellenfeldes auf einem Farbmonitor (14) visuell dargestellt wird.

5. Einrichtung nach einem der Ansprüche 1 bis 4, dadurch gekennzeichnet, dass zur quantitativen Auswertung des Polarisationszustandes eines Lichtwellenfeldes die dem Chrominanzsignal und dem Luminanzsignal einer Fernsehübertragungsstrecke entsprechenden Signale der Polarisationskamera (7) auf Phase und Amplitude untersucht werden.

6. Einrichtung nach Anspruch 5, dadurch gekennzeichnet, dass die Ausgangssignale der Polarisationskamera oder Linearkombinationen davon in Digitalform umgesetzt werden und zur Adressierung eines elektronischen Speichers (511) dienen, um aus diesem die der jeweiligen Kombination von Ausgangssignalen entsprechenden polarisationsoptischen Signale auszulesen.

7. Verwendung einer Einrichtung nach einem der Ansprüche 1 bis 6 in einem ellipsometrischen Messsystem.

8. Verwendung einer Einrichtung nach einem der Ansprüche 1 bis 6 in einem mit gegenläufig zirkular polarisiertem Licht arbeitenden interferometrischen System zur Oberflächentopographie.

9. Verwendung einer Einrichtung nach einem der Ansprüche 1 bis 6 in einem System zur holographischen Interferometrie mit einem holographischen Aufzeichnungsmedium (57), dem bereichsweise Polarisatoren (58) vorgeschaltet sind, deren Durchlassrichtungen sich um 60° unterscheiden und in dem das Hologramm eines Gegenstands (53) mit gegenläufig zirkular polarisiertem Referenz- (501) und Objektstrahl (500) erzeugt wird und bei dem gleichsinnig polarisierte Objekt- und Referenzstrahlen zur Erzeugung von Hologramm-Rekonstruktionen verschiedener Phase verwendet werden, die der Polarisationskamera (59) zugeführt werden.

10. Verwendung nach Anspruch 9, bei der die Polarisationskamera (59) hinter dem holographischen Aufzeichnungsmedium (57) angeordnet ist.

## Claims

1. Device for determining the polarization state of a light wave field, with a TV-camera containing polarization filters, characterized in that for point-wise determining position and shape of the local polarization ellipse of the light wave field (6) the TV camera is provided as a polarization camera (7) is used as a TV camera in the form of a modified colour TV camera whose three colour filters have been replaced by polarizers (12a, b, c) whose transmission directions differ by 60° respectively.

2. Device as claimed in claim 1, characterized in that the modified colour TV camera is a camera with three pick-up tubes with respectively associated polarizers (12).

3. Device as claimed in claim 1, characterized in that the modified colour TV camera comprises polarization filters in the form of a colour strip filter.

4. Device as claimed in anyone of claims 1 to 3, characterized in that the polarization state of the light wave field is visually displayed on a colour monitor (14).

5. Device as claimed in anyone of claims 1 to 4, characterized in that for the quantitative evaluation of the polarization state of a light wave field the signals of the polarization camera (7) which correspond to the chrominance signal and the luminance signal of a TV transmission path are examined for phase and amplitude.

6. Device as claimed in claim 5, characterized in that the output signals of the polarization camera or linear combination thereof are converted into digital form and used for addressing an electronic storage (511) in order to read out therefrom the polarization-optical signals corresponding to the respective combination of output signals.

7. Use of a device as claimed in anyone of claims 1 to 6 in an ellipsometric measuring system.

8. Use of a device as claimed in anyone of claims 1 to 6 in an interferometric system for surface topography operating with oppositely circularly polarized light.

9. Use of a device as claimed in anyone of claims 1 to 6 in a system for holographic interferometry with a holographic recording medium (57) before zones of which are arranged polarizers (58) whose transmission directions differ by 60°, and wherein the hologram of an object (53) is produced with oppositely circularly polarized reference (501) and object beams (500), and wherein object and reference beams of equal polarization are used to produce hologram reconstructions of differing phase, which are applied to the polarization camera (59).

10. Use as claimed in claim 9, where the polarization camera (59) is arranged behind the holographic recording medium (57).

**Revendications**

1. Dispositif de détermination de l'état de polarisation d'un champ d'ondes lumineuses, comportant une caméra de télévision contenant un filtre de polarisation, caractérisé en ce que, pour une détermination ponctuelle de la position et de la forme de l'ellipse de polarisation locale du champ d'ondes lumineuses (6), il est prévu comme caméra de télévision une caméra de polarisation (7) sous la forme d'une caméra de télévision couleur modifiée, dont les trois filtres couleur sont respectivement remplacés par des polariseurs (12a, b, c) dont les directions de passage sont décalées respectivement de 60°.

2. Dispositif selon la revendication 1, caractérisé en ce que la caméra de télévision en couleur modifiée est une caméra à trois tubes auxquels sont respectivement associés des polariseurs (12).

3. Dispositif selon la revendication 1, caractérisé en ce que la caméra de télévision en couleur modifiée comporte des filtres de polarisation du type filtre de séparation de composants de couleur.

4. Dispositif selon l'une des revendications 1 à 3, caractérisé en ce que l'état de polarisation du champ d'ondes lumineuses est représenté visuellement sur un moniteur-couleur (14).

5. Dispositif selon une des revendications 1 à 4, caractérisé en ce que, pour l'évaluation quantitative de l'état de polarisation d'un champ d'ondes lumineuses, les signaux de la caméra de polarisation (7) correspondant au signal de chrominance et au signal de luminance d'une voie de transmission de télévision sont analysés en phase et en amplitude.

6. Dispositif selon la revendication 5, caractérisé en ce que les signaux de sortie de la caméra de polarisation, ou une combinaison linéaire de ceux-ci, sont convertis numériquement et servent à l'adressage d'une mémoire électronique (511), de façon à lire dans celle-ci des signaux de polarisation optique correspondant à la combinaison associée de signaux de sortie.

7. Utilisation d'un dispositif selon l'une des revendications 1 à 6 dans un système de mesure ellipsométrique.

8. Utilisation d'un dispositif selon l'une des revendications 1 à 6 dans un système de topographie de surface opérant avec une lumière polarisée circulairement en opposition.

9. Utilisation d'un dispositif selon l'une des revendications 1 à 6 dans un système d'interférométrie holographique, comportant un support d'enregistrement holographique (57) devant lequel sont placés par zones des polariseurs (58) dont les directions de passage sont décalées de 60°, et dans lequel est produit l'hologramme d'un objet (53) au moyen d'un rayon de référence (501) et d'un rayon d'objet (500) polarisés circulairement en opposition, et dans lequel des rayons d'objet et de référence polarisés dans le même sens sont utilisés pour produire des reconstitutions de l'hologramme de phases différentes, qui sont appliquées à la caméra de polarisation (59).

10. Utilisation selon la revendication 9, dans laquelle la caméra de polarisation (59) est placée en arrière du support d'enregistrement holographique (57).

FIG. 1

FIG. 2

FIG. 3

FIG. 3 B

FIG. 4

FIG. 5